# EUROPÄISCHE PATENTANMELDUNG

(11) **EP 2 060 542 A1**
(43) Veröffentlichungstag der Anmeldung: **20.05.2009**
(21) Anmeldenummer: 08018032.6
(22) Anmeldetag: 15.10.2008
(51) Int. Cl.: C02F 3/28

(54) **Verfahren zur Rückgewinnung von Chemikalien aus Abwasser unter Verwendung von Stickstoff-Verbindungen**

(30) Priorität: 12.11.2007 DE 102007054208
(71) Anmelder: Voith Patent GmbH, 89522 Heidenheim (DE)
(72) Erfinder: Schubert, Hans-Ludwig Dr., 88255 Baienfurt (DE); Aalto, Esa-Matti, 22605 Hamburg (DE); Paasch, Volker, 88212 Ravensburg (DE)

(57) **Zusammenfassung**

Verfahren zur Rückgewinnung von Chemikalien aus Abwasser, das bei der Herstellung von Faserstoff aus lignocellulosischem Rohstoff unter Einsatz von Schwefelsalzen entsteht, wobei das Abwasser einer mindestens einstufigen anaeroben Abwasserbehandlugn unterzogen wird, wobei Schwefel und/oder Schwefelverbindungen erzeugt werden,
dadurch gekennzeichnet, dass dem Abwasser, das Schwefelsalze enthält, Abwasser, dass Stickstoff-Verbindungen enthält, zugesetzt wird.

## Beschreibung

Die Erfindung betrifft ein Verfahren zur Chemikalien-Rückgewinnung aus Abwasser, das bei der Herstellung von Faserstoff aus lignocellulosischem Rohstoff mittels Schwefelsalzen entsteht.

Die Herstellung von Faserstoff aus lignocellulosischem Rohstoff zur Herstellung von z. B. Papier oder Pappe erfolgt in großem industriellem Maßstab. Bei der Mehrzahl der Verfahren zur Herstellung von z. B. CTMP, Hochausbeute- oder Vollzellstoff werden Schwefelsalze in wässriger Lösung, ggf. unter Zusatz von organischen Lösungsmitteln wie insbesondere Alkohol, zum Erweichen und/oder Lösen des Lignins eingesetzt. Hauptsächlich werden Sulfite oder Sulfide für den Aufschluss von Holz oder Einjahrespflanzen eingesetzt. Als Basen werden meist Natrium, Calcium, Magnesium und/oder Ammonium eingesetzt.
Je nach Aufschluss-Verfahren werden zusätzlich Säuren, Laugen oder Additive wie Chinon-Komponenten zugesetzt. Ein typisches Beispiel für eine Aufschluss-Chemikalie ist Natriumsulfit, z. B. eingesetzt in einem Faserstoff-Aufschluss, der bei Anfangs-pH-Werten von 9-10 geführt wird, zum Erzeugen von Kiefer-Hochausbeutefaserstoff.

Sowohl wegen der Kosten als auch aus Gründen des Umweltschutzes müssen die eingesetzten Chemikalien, insbesondere die Schwefelsalze, -sofern nicht sehr geringe Mengen eingesetzt werden- zurückgewonnen werden. Dies geschieht heute, indem das Abwasser der Faserstoff-Herstellung zunächst durch Eindampfen aufkonzentriert wird. Dann wird das konzentrierte Abwasser bei Temperaturen über 1000 °C verbrannt. Die organischen Bestandteile (Kohlenhydrate, Lignin) werden während der Verbrennung zersetzt, die anorganischen Bestandteile werden aufgefangen und zum erneuten Einsatz für die Herstellung von Faserstoff aufbereitet. Nachteilig hierbei sind vor allem die erheblichen Investi-tionskosten für die Anlagen, in denen die Rückgewinnung durchgeführt wird. Weiter nachteilig ist die komplexe und aufwändige Verfahrensführung bei der Aufbereitung der Aufschlusschemikalien. Insbesondere das Eindampfen und Verbrennen des Abwassers ist energieaufwändig und erfordert teure Anlagen.

Es besteht also Bedarf, ein Verfahren zur Rückgewinnung von Chemikalien für den Aufschluss von Faserstoff aus lignocellulosischem Rohstoff unter Einsatz von Schwefelsalzen vorzuschlagen, das geringe Investitionskosten verursacht.

Erfindungsgemäß wird ein Verfahren nach Anspruch 1 zur Lösung der vorstehenden Aufgabe vorgeschlagen.

Das Verfahren setzt die Behandlung von Abwässern aus der Faserstoff-Herstellung mittels anaerober Mikroorganismen voraus. Abwässer, die Substanzen enthalten, deren Abbau Sauerstoff verbraucht, werden als Abwässer mit einer CSB-Belastung bezeichnet (CSB = Chemischer Sauerstoff-Bedarf). Solche Abwässer kommen vielfältig vor, sei es als gewerbliche, kommunale oder industrielle Abwässer. Bei der anaeroben Abwasserbehandlung wird die CSB-Belastung durch Einwirkung von Mikroorganismen (Bakterien) abgebaut, die unter Sauerstoff-Abschluss, meist im Dunkeln und bei Temperaturen von 15 °C bis 25 °C (psychrophile Mikroorganismen), von 25 °C bis 45 °C (mesophile Mikroorganismen) oder von 45 °C bis 70 °C, vereinzelt auch bei höheren Temperaturen, (thermophile Mikroorganismen) diese sauerstoffzehrenden Substanzen, meist organische Materie, abbauen.

Die Mikroorganismen werden als Schlamm mit dem zu behandelnden Abwasser versetzt, wobei verschiedene Verfahren bekannt sind, von Durchmischungsreaktoren über Festbettreaktoren bis zu Reaktoren, die als Schlammbett- oder Pellet-Reaktoren z. B. nach dem UASB-Verfahren (upflow anaerob sludge blanket-Verfahren) arbeiten, wie z. B. in der WO 99/51 532 (Zeppelin Silo- und Apparatetechnik GmbH) oder in der DE 10 2005 050 997 (Aquatyx GmbH) beschrieben. Auch das EGSB-Verfahren (Expanded Granulated Sludge Blanket-Verfahren) ist zur Durchführung des erfindungsgemäßen Verfahrens geeignet. Die Beschreibung der in den angegebenen Schriften offenbarten Bau- und Verfahrensweise von UASB-Reaktoren machen wir hiermit zum Gegenstand dieser Patentanmeldung. Es wird ausdrücklich angemerkt, dass die Erfindung nicht auf bestimmte Verfahren oder Reaktoren der anaeroben Abwasserbehandlung beschränkt ist.

Zu Beginn der anaeroben Abwasserbehandlung werden Abwasser und Mikroorganismen miteinander in Berührung gebracht. Am Ende der Abwasserbehandlung entstehen Schlamm, Filtrat und gasförmige Bestandteile. Der Schlamm macht mit ca. 10 % der abgebauten CSB-Belastung nur einen verhältnismäßig kleinen Bestandteil aus. Das Gas, in der Regel Methan und Kohlendioxid, wird als Biogas bezeichnet macht 90% der abgebauten CSB-Belastung aus und wird zur Energieerzeugung eingesetzt. Das Filtrat wird als gereinigtes Abwasser dem Vorfluter zugeführt.

Die anaerobe Abwasserbehandlung verläuft in vier Haupt-Reaktionsschritten. Zunächst werden die organischen Substanzen, die als CSB-Belastung erfasst werden, hydrolysiert. Die Hydrolyseprodukte, z. b. Oligomere oder Monomere werden nach Acidogenese in organische Säuren und/oder Alkohole umgewandelt. Diese organischen Säuren oder Alkohole werden durch Acetogenese in Wasserstoff und Acetate umgesetzt. Actetate und Wasserstoff werden infolge Methanogenese zu Methan umgesetzt. Die zur Herstellung von Methan führenden Reaktionen werden bei den bekannten Verfahren der Abwasserbehandlung bevorzugt. Gleichzeitig laufen unerwünschte, konkurrierende Reaktionen ab, die z. B. zur Freisetzung von Kohlendioxid und/oder Schwefelwasserstoff führen. Die organischen Substanzen werden durch die Einwirkung anaerober Mikroorganismen also reduziert. Zur Reduzierung des CSB tragen alle der oben genannten Reaktionen bei. Dabei dienen insbesondere Acetat-Verbindungen als Nährstoff für Bakterien, sowohl für Schwefel reduzierende Bakterien als auch für Methan erzeugende Bakterien.

Im Umfeld der Faserstoff-Herstellung und -Verarbeitung ist der Einsatz der anaeroben Abwasserbehandlung beschrieben worden für den Abbau der CSB-Belastung von Abwässern von schwefelfreien Soda-Aufschlüssen von landwirtschaftlichen Rohstoffen, für den Abbau der CSB-Belastung von Abwässern aus der Papierherstellung und für den Abbau der CSB-Belastung von Brüdenkondensaten der Viskoseherstellung.

Für die bekannte, vorbeschriebene anaerobe Abwasserbehandlung wird stets angemerkt, dass die aufzubereitenden Abwässer frei von Schwefelverbindungen sein sollen, weil die Umsetzung von Schwefelverbindungen in Schwefelwasserstoff gegenüber der erwünschten Umsetzung von Kohlenstoffverbindungen in Methan bevorzugt abläuft. In Gegenwart von Schwefelverbindungen wird also die Ausbeute an Methan beeinträchtigt. Außerdem bereitet Schwefelwasserstoff bei der Nutzung von Biogas Korrosionsprobleme.

Die Mikroorganismen, die die Umsetzung der Chemikalien und/oder den Abbau der CSB-Belastung bewältigen, ziehen einen Teil ihrer Nahrung aus dem CSBbelasteten Abwasser. Mangelstoffe, also Stoffe, die in dem jeweils zu behandelnden Abwasser nicht enthalten sind, müssen jedoch von außen zugeführt werden. Ohne diese Nährstoffe laufen die biologischen Prozesse der anaeroben Abwasserbehandlung nicht stabil und langfristig ab. Insbesondere Stickstoff-Verbindungen, aber auch Spurenelemente werden daher bei bekannten anaeroben Verfahren als Nährlösung mit dem aufzubereitenden Abwasser zugeführt.

Es ist die besondere Leistung der Erfinder, die Eignung der anaeroben Abwasserbehandlung zur Rückgewinnung von Chemikalien aus Faserstoff-Abwasser erkannt zu haben, das Schwefelsalze enthält. Die Erfinder schlagen gegenüber dem Stand der Technik ganz abweichende Prioritäten bei der Durchführung des erfindungsgemäßen Verfahrens vor. Es kommt erfindungsgemäß nicht auf eine maximierte Erzeugung von Biogas oder auf einen maximierten Abbau der CSB-Belastung an. Vielmehr sollen die im Abwasser enthaltenen Schwefelsalze von der Base (z. B. Natrium, Calcium, Magnesium oder Ammonium) getrennt und zu Schwefel und/oder Schwefelverbindungen umgesetzt werden. Bevorzugt wird die Erzeugung von Schwefel, Schwefelwasserstoff und/oder Schwefeldioxid. Schwefel schwimmt auf dem Filtrat auf, Schwefelwasserstoff wird als Gas freigesetzt, Schwefeldioxid liegt entweder gasförmig oder in Wasser bzw. Filtrat gelöst vor. Die Rückgewinnungsrate der Schwefelsalze des Abwassers beträgt mit dem erfindungsgemäßen Verfahren mindestens 10 %, vorzugsweise mindestens 50 %, in der Regel bis zu 70%.

Weiter ist es von Vorteil, wenn bei der anaeroben Abwasserbehandlung die vom Schwefel getrennte Base, die in Wasser gelöst vorliegt, mit dem Filtrat ausgetragen wird. Bevorzugt ist die Base zu Carbonat oxidiert, z. B. Natrium-, Calcium-, Magnesium- oder Ammoniumcarbonat. Es kann aber auch eine Umsetzung zu Hydroxiden erfolgen; auch eine Mischung von Oxidationsprodukten ist möglich, beispielsweise in der Form, dass Carbonate und Hydroxide nebeneinander vorliegen.

Erfindungsgemäß wird nun für ein anaerobes Verfahren zur Rückgewinnung von Chemikalien für die Herstellung von Faserstoffen mit Schwefelsalzen vorgeschlagen, das Abwasser aus der Faserstoff-Herstellung mit einem Abwasser zu mischen, das Stickstoff-Verbindungen enthält. Die stetige Zufuhr von Stickstoff-Verbindungen stabilisiert die Verfahrensführung einer anaeroben Abwasserbehandlung beträchtlich.

Besonders bevorzugt wird es, das Abwasser mit Stickstoff-Verbindungen vor der anaeroben Abwasserbehandlung mit dem Abwasser der Faserstoff-Herstellung zu mischen, so dass ein einheitliches Substrat entsteht.

Wird aus den nachfolgend erläuterten Gründen vor der anaeroben Abwasserbehandlung eine aerobe Abwasserbehandlung durchgeführt, dann wird bevorzugt, wenn das Stickstoff-Verbindungen enthaltende Abwasser auch vor der aeroben Abwasserbehandlung mit dem Schwefelsalze enthaltenden Abwasser gemischt wird.

Bevorzugt wird als Stickstoff-Verbindungen enthaltendes Abwasser das Abwasser einer Formamidin-Sulfonsäure (FAS)-Bleichstufe dem Schwefelsalze enthaltenden Abwasser zugemischt.

Das erfindungsgemäße Verfahren kann im einfachsten Fall einstufig durchgeführt werden. Um wirtschaftliche Größenordnungen für die Abwasserbehandlungs-Reaktoren zu erreichen, können mehrere Reaktoren parallel zueinander betrieben werden. Es ist aber auch möglich, mehrere anaerobe Behandlungsstufen nacheinander durchzuführen, insbesondere dann, wenn dadurch die Rückgewinnungsrate der Chemikalien gesteigert wird. Es ist als besonderer Vorteil der Erfindung anzusehen, dass auch Abwässer bzw. Ablaugen wirtschaftlich aufbereitet werden können, die nur einen verhältnismäßig geringen Gehalt an Schwefelverbindungen aufweisen. So können beispielsweise die Ablaugen von CTMP-Faserstoffen mit dem erfindungsgemäßen Verfahren aufbereitet werden, obwohl der Gehalt an Schwefelverbindungen für eine konventionelle Aufbereitung zu gering und für eine bekannte anaerobe Abwasserbehandlung zu hoch ist.

Mit dem Schwefel, den gasförmigen und/oder in Wasser gelösten Schwefelverbindungen und ggf. dem alkalischen Filtrat stehen aus Abwasser zurückgewonnene Chemikalien zur Verfügung. Das erfindungsgemäße Verfahren arbeitet bei Temperaturen von deutlich unter 100 °C. Die für die Aktivität der psychrophilen, mesophilen oder thermophilen Mikroorganismen geeigneten Temperaturen liegen bei maximal 70 °C, also weit unter den Temperaturen, bei denen die bekannten Rückgewinnungs-Verfahren arbeiten.

Es ist als besonderer Vorteil des erfindungsgemäßen Verfahrens anzusehen, dass eine Eindampfung des aufzubereitenden Abwassers nicht erforderlich ist. Die Einsparung der Eindampfung bewirkt eine erhebliche Verringerung der Betriebs- und Investitionskosten und eine wesentlich vereinfachte Verfahrensführung. Auch das Einsparen der Ablaugen-Verbrennung reduziert die Betriebsund Anlagenkosten und vermeidet einen kritischen und aufwändigen Verfahrensschritt.

Die Erzeugung von Methan und /oder Kohlendioxid ist in Ergänzung zur Umsetzung der Schwefelverbindungen eine vorteilhafte Option des erfindungsgemäßen Verfahrens, weil gegenüber der konventionellen Chemikalien-Rückgewinnung überschüssige Energie nicht nur in Form von Strom und Wärme bereitgestellt werden kann. Vielmehr wird ein primärer Energieträger erzeugt, der weitaus vielfältiger eingesetzt und genutzt werden kann. Auch die Speicherung von Energie in Form von Gas ist möglich.

Nach einer vorteilhaften Ausgestaltung des erfindungsgemäßen Verfahrens verbleibt nach der anaeroben Abwasserbehandlung Lignin im Filtrat. Lignin ist ein komplexes Molekül, das nicht ohne weiteres von Mikroorganismen abbaubar ist. Für das erfindungsgemäße Verfahren ist das jedoch kein Nachteil. Lignin, insbesondere hochmolekulares Lignin, ist ein vielfältig einsetzbarer Grundstoff, der mit hoher Wertschöpfung verwertet werden kann. Er liegt am Ende der anaeroben Abwasserbehandlung im Filtrat vor und kann daraus einfach und mit bekannten Verfahren z. B. der Filtration oder der Fällung in wirtschaftlich verwertbarer Form isoliert werden. Durch die einfache Bereitstellung von Lignin kann eine gesteigerte Wertschöpfung erreicht werden. Gleichzeitig wird das Filtrat von weiterer organischer, sauerstoffzehrender Substanz befreit, so dass durch diese Maßnahme die CSB-Belastung des Abwassers zusätzlich reduziert wird.

Nach einer bevorzugten Ausführung des erfindungsgemäßen Verfahrens wird durch die anaerobe Abwasserbehandlung mindestens 5 %, bevorzugt aber mehr als 20 %, vorteilhaft mehr als 30 %, besonders bevorzugt bis zu 40 % der ursprünglich im Abwasser vorhandenen CSB-Belastung abgebaut. Das erfindungsgemäße Verfahren gibt zwar der Rückgewinnung der Chemikalien Vorrang, trägt aber trotzdem zur Reduktion der CSB-Belastung bei. Auch die Umsetzung von Schwefel-Verbindungen, die nicht zu einer entsprechenden Methan-Erzeugung führt, trägt zu einer weiter verbesserten Energiebilanz des Verfahrens bei.

Es erweist sich weiter als vorteilhaft, wenn die CSB-Belastung des Abwassers aus der Faserstoff-Herstellung bis zu 150 g/l CSB enthält, weil dann die Rückgewinnungsrate der Chemikalien und die Abbaurate des CSB besonders hoch sind und das Verfahren entsprechend wirtschaftlich durchgeführt werden kann. Bevorzugt werden Abwässer eingesetzt, die eine CSB-Belastung von 20 g/l bis 120 g/l, insbesondere von 40 g/l bis 100 g/l aufweisen. Insbesondere die Abwässer von CTMP-Faserstoff oder von Hochausbeute-Faserstoff, die unter Einsatz von Schwefelverbindungen erzeugt werden, weisen CSB-Belastungen in dem vorgenannten Rahmen auf.

Es ist als besonderer Vorteil des erfindungsgemäßen Verfahrens anzusehen, dass die zurückgewonnenen Chemikalien nach einer bevorzugten Weiterbildung mit nur wenigen, einfachen und nicht energieaufwändigen Schritten in Chemikalien umgesetzt werden können, die für eine erneute Verwendung in einem Faserstoff-Aufschluss mittels Schwefelsalzen eingesetzt werden können. Je nach Zusammensetzung der Ablauge liegt als Reaktionsprodukt der anaeroben Abwasseraufbereitung Schwefel vor. Schwefel wird insbesondere dann erzeugt, wenn im Rahmen der anaeroben Abwasseraufbereitung die Natrium-Komponente der Ablauge nicht zu Natriumcarbonat sondern zum wesentlich alkalischeren Natriumhydroxid umgesetzt wird. Der Schwefel kann mittels Sauerstoffzufuhr, beispielsweise durch Verbrennen, zu Schwefeldioxid oxidiert werden und dann weiter mit alkalischem Filtrat zu Alkalisulfit umgesetzt werden.

Alternativ kann während der anaeroben Abwasseraufbereitung Schwefelwasserstoff entstehen, der mit Sauerstoff zu Schwefeldioxid und anschließend mit alkalischem Filtrat zu Alkalisulfit umgesetzt werden kann. Außerdem kann gasförmiges oder in Wasser gelöstes Schwefeldioxid mit alkalischem Filtrat zu Alkalisulfit umgesetzt werden. Es kann auch eine direkte Umsetzung des Schwefelwasserstoffs mit Wasser und Alkali zu Alkalisulfid erfolgen, z.B. mit alkalischem Filtrat im Rahmen einer Gaswäsche. Hier zeigt sich die Einfachheit der Verfahrensführung, die ohne aufwändige Verfahrensschritte wieder gebrauchsfertige Aufschlusslösung bereitstellt.

Um die Effizienz der anaeroben Abwasserbehandlung zu verbessern kann nach einer bevorzugten Ausführung des erfindungsgemäßen Verfahrens der anaeroben Abwasserbehandlung eine aerobe und/oder anaerobe Vorbehandlung des Abwassers vorgeschaltet werden. Eine solche Vorbehandlung, beispielsweise eine Vorversäuerung, erweist sich als vorteilhaft, wenn das Abwasser die Bildung unerwünschter, die Methanogenese störender Substanzen verhindert oder minimiert werden soll. Die Vorversäuerung ist eine anaerobe Abwasserbehandlung, die im sauren pH-Bereich abläuft, und die bevorzugt zur Bildung von Acetaten führt.

Alternativ kann auch eine aerobe Vorbehandlung erfolgen, z. B., indem Weißfäulepilze auf die Ablauge einwirken. Diese biologische Vorbehandlung trägt dazu bei, dass die Effizienz und Stabilität der anaeroben Abwasserbehandlung gesteigert wird, wenn die Chemikalien im Abwasser vor der erfindungsgemäßen anaeroben Abwasserbehandlung so weit wie möglich oxidiert sind. Schwefelverbindungen werden zu Sulfat oxidiert, Kohlenstoffverbindungen werden, soweit sie oxidiert werden, zu Carbonaten oxidiert.

Soweit in dieser Patentanmeldung verschiedene Ausführungen des erfindungsgemäßen Rückgewinnungsverfahrens beschrieben wurden, können diese verschiedenen Ausführungen auch miteinander kombiniert werden.

Details des erfindungsgemäßen Verfahrens werden an Hand des nachfolgenden Ausführungsbeispiels erläutert.

Einer Anlage zur anaeroben Abwasserbehandlung von Abwasser einer Altpapier-Aufbereitung wird Schlamm entnommen, der anaerobe Mikroorganismen enthält. Dieser Schlamm wird über einen Zeitraum von ca. 3 bis 6 Monaten mit einem Abwasser versorgt, das, ausgehend von dem Abwasser der Altpapier-Aufbereitung, in Schritten von jeweils 5 Volumenprozent zunehmend durch Abwasser eines alkalischen Sulfitverfahrens zur Herstellung von Hochausbeute-Faserstoff ersetzt wird, so dass die Mikroorganismen am Ende des genannten Zeitraums vollständig auf das neue Abwasser-Substrat umgestellt sind.

Das alkalische Sulfitverfahren ist in der DE 10 2006 027 006 beschrieben. Wir erklären ausdrücklich, dass der Inhalt dieser Patentanmeldung auch zur Offenbarung dieser Patentanmeldung zählen soll. Nach einer typischen Ausführung dieses Verfahrens wird Natriumsulfit zum Aufschluss von Holz eingesetzt. Die Ausbeute des Verfahrens liegt bei 85%, es gehen also während des Aufschlusses ca. 15 % der Holzsubstanz in Lösung und werden mit dem Abwasser ausgetragen. Das Abwasser eines solchen Aufschlusses von lignocellulosischem Rohstoff, hier Holz, weist eine CSB-Belastung von 55 g/l auf. Der pH-Wert des Abwassers liegt zwischen 6,5 und 7,0 und ist damit ideal für eine effiziente Wirkung der anaeroben Mikroorganismen. Das Abwasser verlässt die Faserstoff-Wäsche mit einer Temperatur von ca. 60 °C und tritt mit einer Temperatur von 40°C in die Abwasserbehandlung ein. Es kann damit unmittelbar der aeroben oder der anaeroben Abwasserbehandlung bzw. einer aeroben und/oder anaeroben Vorbehandlung zugeführt werden.

Das Abwasser des Hochausbeute-Sulfitaufschlusses enthält Lignin, darunter sulfonierte Ligninbausteine, Kohlenhydrate, darunter Cellulose und Hemicellulosen sowie Reaktionsprodukte der Aufschlusschemikalien und unverbrauchte Chemikalien. Der so erzeugte Faserstoff wird im Folgenden unter anderem mit Formamidin-Sulfonsäure (FAS) gebleicht. Das Abwasser dieser Bleichstufe enthält Stickstoff-Verbindungen. Der Stickstoff wurde über das reduzierend wirkende FAS eingebracht.

Das Abwasser der Faserstoff-Herstellung, das Schwefelsalze enthält, wird mit dem Abwasser der FAS-Bleiche, das Stickstoff-Verbindungen enthält, gemischt.

Dieses gemischte Abwasser wird zunächst einer aeroben Abwasserbehandlung unterzogen. Die Mikroorganismen der aeroben Stufe werden in vergleichbarer Weise wie die Mikroorganismen der anaeroben Stufe auf das neue Substrat umgestellt und oxidieren dann niedermolekulare Kohlenstoff-Verbindungen zu Carbonaten und insbesondere in dem Abwasser enthaltene Sulfite zu Sulfaten. Am Ende der aeroben Stufe liegt die Base des Aufschlusses, soweit nicht als Sulfat gebunden, ganz überwiegend als Natriumcarbonat in wässriger Lösung vor.

Das so aufbereitete Abwasser wird dann der anaeroben Abwasserbehandlung zugeführt. Das Abwasser wird unten in einen UASB-Reaktorturm eingeführt und steigt in dem Turm aufwärts und durchdringt dabei den darin enthaltenen Schlamm /die darin enthaltenen mesophilen Mikroorganismen. Da die Umsetzung der Sulfate zu Schwefelwasserstoff bevorzugt abläuft, werden zunächst die Sulfate umgesetzt. Überwiegend entweicht Schwefelwasserstoff als Gas, ein Teil wird aber auch mit Wasser zu Schwefeldioxid umgesetzt, das teilweise gasförmig entweicht, teilweise in Wasser gelöst bleibt. Daneben entsteht elementarer Schwefel, insbesondere bei höheren pH-Werten, die sich ergeben, wenn die alkalische Komponente des Abwassers, Natrium, nicht zu Carbonat, sondern zu Hydroxid umgesetzt wird.

Parallel, überwiegend aber im Anschluss an die Umsetzung der Schwefelverbindungen erfolgt der Abbau der CSB-Belastung durch die Umsetzung zu Methan, die über die Schritte der Hydrolyse, der Acidogenese, der Acetogenese und der Methanogenese erfolgt. Im Gleichgewicht mit Methan wird auch Kohlendioxid gebildet.

Schwefelwasserstoff, Methan und Kohlendioxid entweichen gasförmig am oberen Ende des Turms. Die Gase, die beim Aufsteigen des Abwassers im Turm zunächst an die Schlammpellets gebunden bzw. in diese eingelagert sind, werden durch Abstreifer von den Pellets getrennt und aufgefangen. Die vom Gas befreiten Pellets verlieren an Auftrieb und sinken wieder zum Boden des Turms, wo der Kreislauf der chemischen Umsetzung erneut beginnt. Das Filtrat, das noch einen Rest der CSB-Belastung und das Natriumkarbonat und/oder - hydroxid enthält, wird an Überläufen am oberen Ende des Turms entnommen. Elementarer Schwefel schwimmt auf dem alkalischen Filtrat auf und kann am Überlauf abgenommen werden.

Die Mikroorganismen, die in den aeroben und anaeroben Stufen der Abwasserbehandlung wirken, entziehen dem Abwasser die für ihren Stoffwechsel erforderlichen Nährstoffe. Die über das FAS-Abwasser eingebrachten Stickstoff-Verbindungen dienen den Mikroorganismen der beiden Abwasserbehandlungsstufen als Nährstoff.

Technisch verwertbares Biogas, das aus Methan und Kohlendioxid besteht, tritt aus dem zur Gaswäsche eingesetzten Filtrat aus. Schwefel und Schwefelwasserstoff werden z. B. durch Verbrennung zu Schwefeldioxid oxidiert. Das Schwefeldioxid wird mit dem Natriumkarbonat und/oder -hydroxid zu Natriumsulfit umgesetzt.

Das Filtrat weist eine gegenüber dem Abwasser um 40 % reduzierte CSB-Belastung auf. Der in Form von Schwefelsalzen im Abwasser vorliegende Schwefel wurde zu 70 % in Form von Schwefel, Schwefelwasserstoff und Schwefeldioxid (und in der Folge durch Reaktion mit dem alkalischen Filtrat zu Natriumsulfid) umgesetzt.

## Patentansprüche

1. Verfahren zur Rückgewinnung von Chemikalien aus Abwasser, das bei der Herstellung von Faserstoff aus lignocellulosischem Rohstoff unter Einsatz von Schwefelsalzen entsteht, wobei das Abwasser einer mindestens einstufigen anaeroben Abwasserbehandlugn unterzogen wird, wobei Schwefel und/oder Schwefelverbindungen erzeugt werden, **dadurch gekennzeichnet, dass** dem Abwasser, das Schwefelsalze enthält, Abwasser, dass Stickstoff-Verbindungen enthält, zugesetzt wird.

2. Verfahren nach Anspruch 1, **dadurch gekennzeichnet, dass** das Abwasser, das Stickstoff-Verbindungen enthält, dem Schwefelsalze enthaltenden Abwasser vor Beginn der anaeroben Abwasserbehandlung zugesetzt wird.

3. Verfahren nach Anspruch 1, **dadurch gekennzeichnet, dass** das Abwasser, das Stickstoff-Verbindungen enthält, dem Schwefelsalze enthaltenden Abwasser vor einer aeroben Abwasserbehandlung zugesetzt wird, die der anaeroben Abwasserbehandlung vorgeschaltet wird.

4. Verfahren nach Anspruch 1, **dadurch gekennzeichnet, dass** das Abwasser einer Formamidin-Sulfonsäure-Bleichstufe dem Schwefelsalze enthaltenden Abwasser zugesetzt wird.
